# EUROPEAN PATENT APPLICATION

(11) **EP 2 699 054 A1**
(43) Date of publication of application: **19.02.2014**
(21) Application number: 12770904.6
(22) Date of filing: 11.04.2012
(51) Int. Cl.: H05B 6/12, H05B 6/36

(54) **INDUCTION HEATING COIL, AND INDUCTION HEATING COOKING DEVICE USING SAME**

(30) Priority: 15.04.2011 JP 2011091038
(71) Applicant: Mitsubishi Electric Corporation, Tokyo 100-8310 (JP); Mitsubishi Electric Home Appliance Co., Ltd., Fukaya-shi, Saitama 369-1295 (JP)
(72) Inventor: TANAKA, Michio, Fukaya-shi, Saitama 369-1295 (JP); KANNO, Toshihiro, Fukaya-shi, Saitama 369-1295 (JP)
(74) Representative: Pfenning, Meinig & Partner GbR
(86) International application number: PCT/JP2012/002520
(87) International publication number: WO 2012/140886

(57) **Abstract**

Provided is an induction heating coil that has an odd shape and whose outer shape is less deformable.

To solve the above problem, an induction heating coil formed by winding a conductive wire into a ring shape, wherein the induction heating coil has an outer shape formed in an odd shape, and shape keeping means for keeping the outer shape is attached to the induction heating coil, is used.

In addition, an induction heating cooker including a main body forming an outer shell, a top plate that is provided on the upper surface of the main body and on which a container is placed, and a coil unit provided under the top plate, wherein the coil unit has a coil base and a plurality of induction heating coils provided on the coil base, and at least one of the plurality of induction heating coils is formed by winding a conductive wire into a ring shape, and has an outer shape formed in an odd shape, and a shape keeping means for keeping the outer shape is attached to the induction heating coil, is used.

## Description

### Technical Field

The present invention relates to an induction heating coil for induction-heating a cooking container such as a pot, and an induction heating cooker employing the induction heating coil.

### Background Art

An induction heating coil made by winding a conductive wire covered with a thermal welding layer in a disk shape (ring shape) and then integrating the wound conductive wire by thermally welding the thermal welding layer has been hitherto used in induction heating cookers.

Such an induction heating coil is attached to a coil base formed of resin or the like together with other functional components, and is provided as a coil unit in the main body of an induction heating cooker (for example, Patent Literature 1).

### Citation List

### Patent Literature

Patent Literature 1: Japanese Unexamined Patent Application Publication No. 2011-14416 (Fig. 4)

### Summary of Invention

### Technical Problem

In recent years, in addition to the above-described disk-shaped (ring-shaped) induction heating coil, induction heating coils having various shapes have been proposed.

There have been proposed, for example, an induction heating coil made by winding a conductive wire in an elliptical shape, and an induction heating coil made by forming in a ring shape like the above-described induction heating coil and then applying force from a radial direction of the ring so as to clamp so that an odd shape different from a disk shape (flat shape, cocoon shape, elliptical shape, or the like).

However, in the odd-shaped induction heating coil, compared to the disk-shaped induction heating coil, the curvature (curvature radius) varies in different parts of the wound conductive wire, and therefore there is a variation in the stress acting on the inside of the induction heating coil.

That is, compared to a part of the induction heating coil where the curvature radius is large, in a part of the induction heating coil where the curvature radius is small, the stress acting in a direction in which the curvature radius increases is strong.

Therefore, the stress acting on the inside of the induction heating coil varies in different parts, and the outer shape of the induction heating coil is prone to be deformed.

The induction heating coil needs to be reliably attached to the coil base so as not to come off the coil base or so as not to be displaced even when the induction heating coil is deformed due to heat in use or the like.

It is an object of the present invention to provide an induction heating coil that has an odd shape different from a disk shape and whose outer shape is less deformable, and to provide an induction heating cooker that has a coil base to which such an induction heating coil can be reliably attached.

### Solution to Problem

To solve the above problem, the following induction heating coil may be used.

An induction heating coil formed by winding a conductive wire into a ring shape, wherein the induction heating coil has an outer shape formed in an odd shape, and includes shape keeping means attached thereto for keeping the outer shape.

In addition, the following induction heating cooker may be used.

An induction heating cooker comprises a main body forming an outer shell; a top plate that is provided on an upper surface of the main body and on which a cooking container is placed; and a coil unit provided under the top plate, wherein the coil unit has a coil base and a plurality of induction heating coils provided on the coil base, and at least one of the plurality of induction heating coils is formed by winding a conductive wire into a ring shape whose outer shape is formed in an odd shape, and includes shape keeping means attached thereto for keeping the outer shape. Advantageous Effects of Invention

The present invention can provide an induction heating coil that has an odd shape and whose outer shape is less deformable.

### Brief Description of Drawings

[Fig. 1] Fig. 1 is a perspective view of an induction heating cooker according to Embodiment.
[Fig. 2] Fig. 2 is a perspective view showing the induction heating cooker according to Embodiment with its top plate removed.
[Fig. 3] Fig. 3 is an enlarged top view of the left-hand coil unit of the induction heating cooker of Fig. 2.
[Fig. 4] Fig. 4 is a bottom view of the coil unit shown in Fig. 3.
[Fig. 5] Fig. 5 is an enlarged perspective view showing a position where heating coils face each other.
[Fig. 6] Fig. 6 is a plan view of Fig. 5.
[Fig. 7] Fig. 7 is a sectional view taken along line Y-Y of Fig. 3.
[Fig. 8] Fig. 8 is a sectional view taken along line X-X of Fig. 3.
[Fig. 9] Fig. 9 includes enlarged plan views of heating coils extending in the circumferential direction and formed in an odd-shaped ring shape in the coil unit of Fig. 3.

### Description of Embodiments

Embodiment of the present invention will be described with reference to the drawings.

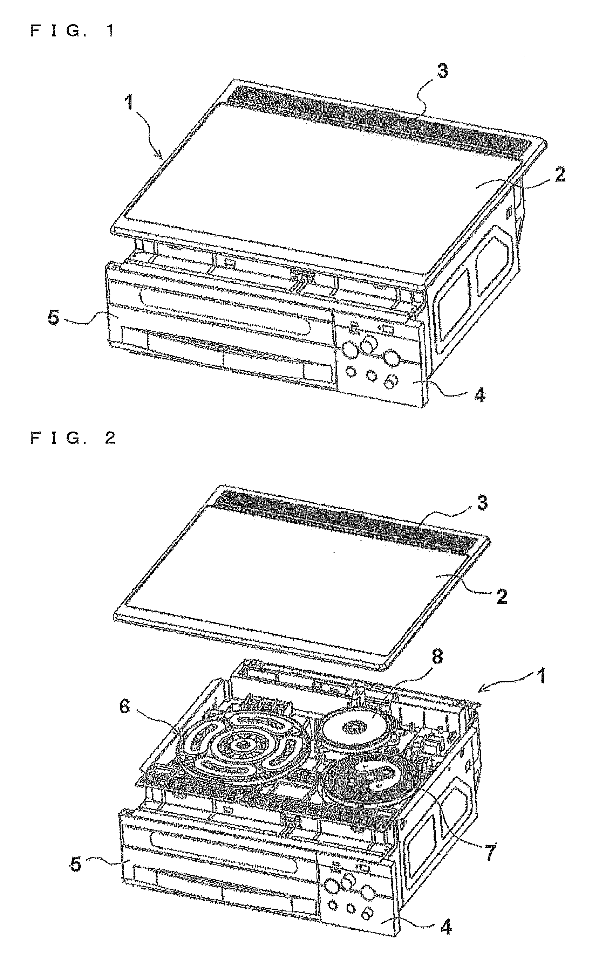

With reference to Fig. 1 to Fig. 2, an induction heating cooker of Embodiment includes a heating cooker main body 1 (hereinafter referred to as main body 1) forming an outer shell, a top plate 2 attached so as to cover an opening at the top of the main body 1 and having an outer frame on its outer periphery, an intake-exhaust port cover 3 detachably attached to the outer frame of the rear part of the top plate 2, an operating portion 4 placed in the front of the main body 1, and a grille door 5 provided adjacent to the operating portion 4 in the front of the main body 1.

When cooking is performed, a cooking container is placed on the upper surface of the top plate 2. The top plate 2 is made of heat-resistant tempered glass. Two coil units 6 and 7 and a heater unit 8 are placed under the top plate 2.

The grille door 5 covers an opening of a grilling chamber in which fish or the like is cooked. The user can open the grille door 5 by pulling a handle provided on the grille door 5.

Next, the coil unit 6 located on the left side of the main body 1 is provided with a plurality of heating coils 64, 65, and 66 described later, and the coil unit 7 located on the right side of the main body 1 is provided with small-diameter and large-diameter ring-like heating coils.

The heater unit 8, which is provided with a radiant heater, is located between and in front of the coil unit 6 and the coil unit 7.

When a high-frequency current flows in heating coils forming the above-described coil units 6 and 7 through an inverter circuit (not shown), magnetic flux depending on the high-frequency current is generated from the heating coils, and a cooking container such as a pot placed on the top plate 2 is induction-heated by the magnetic flux. Instead of the heater unit 8, a coil unit smaller than the outside diameter of the coil unit 7 may be used.

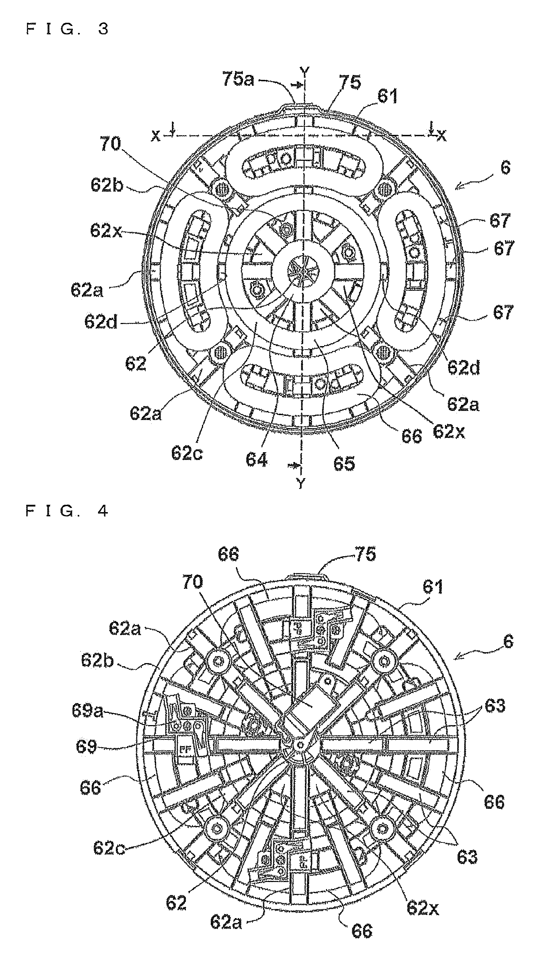

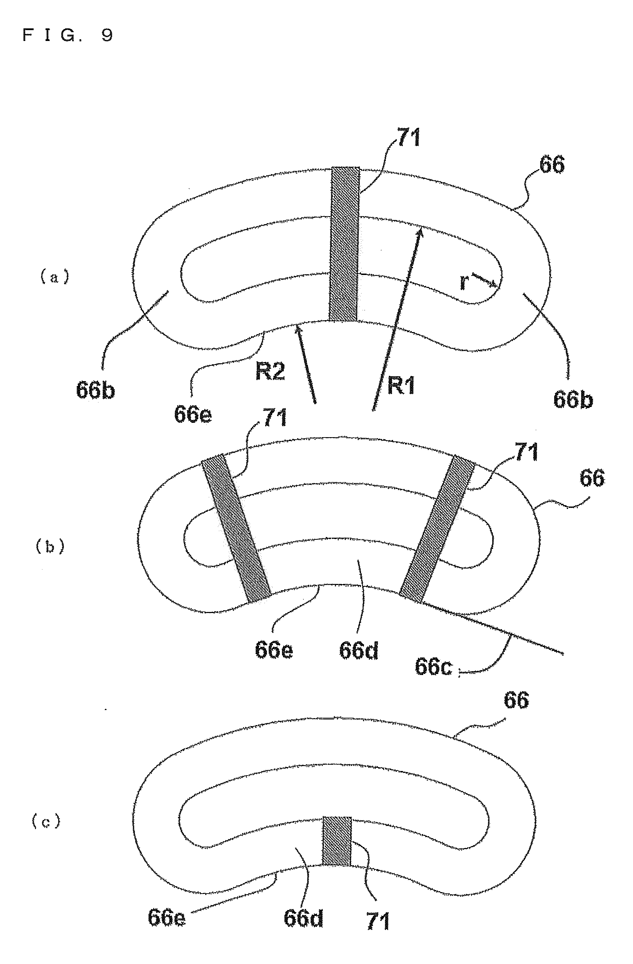

Next, with reference to Fig. 3 to Fig. 4, the coil unit 6 includes a coil base 61, a plurality of pieces of ferrite 63 provided in the coil base 61, a plurality of heating coils 64, 65, and 66, a terminal block 69 connected with lead wires 66c (described later in Fig. 9) extending from these heating coils, and a temperature detecting sensor 70 that detects the temperature of the cooking container.

The coil base 61 has a central support 62 located in the center, a plurality of beam portions 62a extending radially from the central support 62, a ring-shaped side plate 62b connected with the ends of the beam portions 62a, and a circular portion 62c that circularly connects the beam portions 62a adjacent to each other between the central support 62 and the side plate 62b. The coil base 61 is integrally formed of resin in such a manner that its shape in plan view is like a disk.

The circular portion 62c only needs to be provided so as to connect beam portions 62a adjacent to each other, and may be annular (circular) or square (polygonal) in plan view.

Although in Embodiment, the central support 62 is a portion on which the beam portions 62a converge, the central support 62 may be a portion having an opening in the center and formed like a ring surrounding this opening.

The beam portions 62a include beam portions connecting the central support 62 and the side plate 62b, and beam portions connecting the circular portion 62c and the side plate 62b.

That is, the coil base 61 has, between the circular portion 62c and the central support 62, an opening 62x surrounded by the beam portions 62a, the central support 62, and the circular portion 62c.

A temperature detecting portion such as a temperature detecting sensor 40 is provided in the opening 62x. When the coil base 61 is attached to the main body, the opening 62x serves as an air passage for cooling air for cooling the heating coils 64, 65, and 66 flowing upward through the coil base 61.

By configuring the beam portions 62a of the coil base 61 in this manner, the strength of the coil base 61 can be secured, and the attachment positions for functional components and the air passage for cooling air can be secured.

This configuration is effective for such a coil unit that as in Embodiment, a plurality of heating coils 66 are provided on the outer side of the coil base 61, and the weight of the outer periphery of the coil base 61 is thereby increased.

An anti-magnetic ring 75 is provided on the outer periphery of the side plate 62b so as to cover the entire outer periphery.

The anti-magnetic ring 75 makes it hard for magnetic flux generated from the heating coils 64, 65, and 66 to leak from the coil unit 6. So that the worker can see the right direction of the coil unit 6 in the assembling work, a calking portion 75a that closes the ring is located at the top of the coil unit 6.

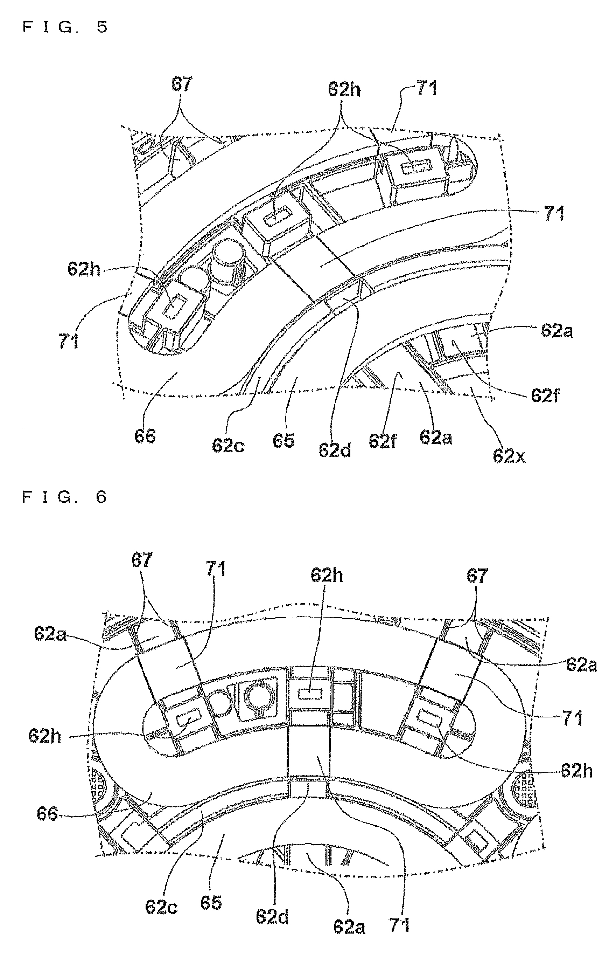

With reference to Fig. 5 to Fig. 7, the circular portion 62c is located substantially midway between the central support 62 and the side plate 62b formed in the coil base 61.

The circular portion 62c is formed like a circle centered at the central support 62 so as to divide the coil base 61 into inner and outer areas, that is, an area where the heating coil 64 and the heating coil 65 formed in substantially circular rings (described later) are placed, and an area where the odd-shaped ring-shaped heating coils 66 are mounted.

That is, the heating coil 64 and the heating coil 65 are placed on the inner side of the circular portion 62c, and the odd-shaped ring-shaped heating coils 66 are placed evenly on the outer side. The circular portion 62c is connected to the beam portions 62a.

The circular portion 62c protrudes relative to the upper surfaces of the beam portions 62a on which the heating coils 64, 65, and 66 (described later) are provided. Partly-recessed cutout portions 62d are formed in parts of the protruding part of the circular portion 62c where the heating coil 65 faces the heating coils 66 when the heating coils are provided on the coil base 61.

The recesses of the cutout portions 62d are open toward the central support 62.

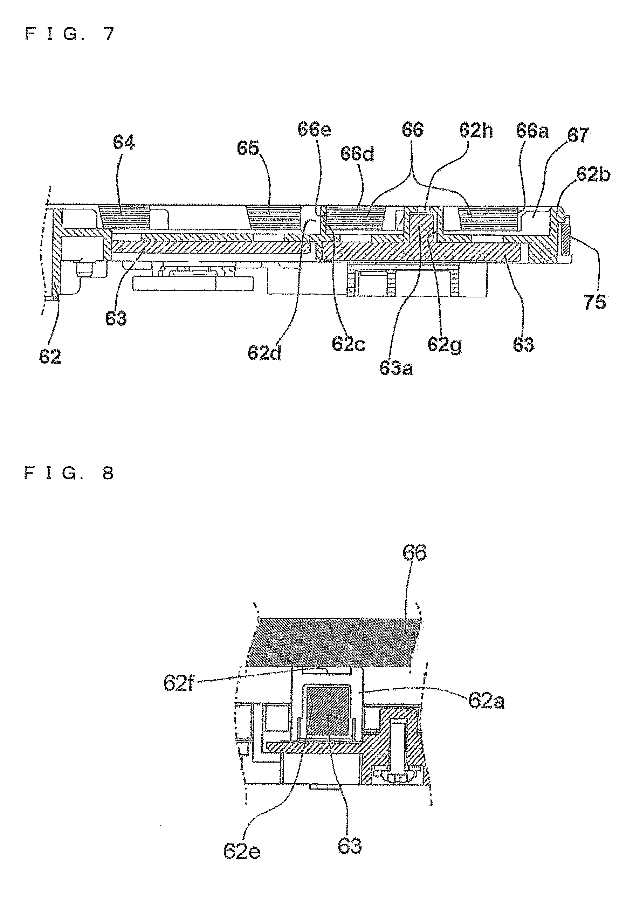

With reference to Fig. 8, which is a sectional view taken along line X-X of Fig. 3, the beam portions 62a are formed in such a manner that the shape of the section perpendicular to a direction toward the central support 62 is a shape that is open upward and downward (for example, an H-shape), and pieces of ferrite 63 are fitted in the openings 62e facing downward.

On the upper surface of the coil base 61, that is, the side opposite to the side where the pieces of ferrite 63 provided in the beam portions 62a are located, the heating coils 64, 65, and 66 described later are provided.

The upward-facing recess-like openings 62f of the beam portions 62a are parts to which adhesive (for example, silicon) for fixing the heating coils 64, 65, and 66 to the beam portions 62a is applied when the heating coils 64, 65, and 66 are provided on the beam portions 62a, and are for forming spaces between the beam portions 62a and the heating coils 64, 65, and 66.

By forming the openings 62f in this manner, parts to which adhesive for fixing the heating coils to the coil base is applied can be formed, and adhesive can be prevented from sticking out from the beam portions 62a.

By forming gaps between the beam portions 62a and the heating coils by forming parts to which adhesive applied to the openings 62f is not applied or by not applying adhesive to parts of the openings 62f, flow passages for air can be formed.

Thus, cooling air can also be caused to flow down to parts where the heating coils 64, 65, and 66 overlap with the beam portions 62a, and the heating coils can be cooled.

With reference to Fig. 7, which is a sectional view taken along line Y-Y of Fig. 3, the shape of the section parallel to a direction toward the central support 62 of the beam portions 62a connecting the central support 62 and the side plate 62b is such that a part of the upper surface protrudes upward (in the direction in which the heating coils are provided), and an upwardly-recessed recessed portion 62g is thereby formed.

As described earlier, pieces of ferrite 63 are provided on the underside of the beam portions 62a. The pieces of ferrite 63 each have a protruded portion 63a part of which protrudes upward. The protruded portions 63a fit in the recessed portions 62g of the beam portions 62a, and the pieces of ferrite 63 are thereby positioned and fixed.

Openings 62h are formed in parts of the recessed portions 62g of the beam portions 62a communicating with the upper surface (surface) of the coil base 61 (the bottoms of the recessed portions).

The openings 62h are ferrite attachment confirmation portions for confirming the attachment of the pieces of ferrite 63 to the coil base 61. By looking at the pieces of ferrite 63 through the openings 62h, it can be confirmed whether or not the pieces of ferrite 63 are reliably attached to the beam portions 62a (the coil base 61), from the upper side of the coil base 61.

Thus, when the coil unit is assembled, it can be confirmed whether or not the pieces of ferrite 63 are attached, without turning over the coil unit.

The openings 62h only need to enable to confirm the attachment of the pieces of ferrite 63. Therefore, in some cases, instead of forming openings in the beam portions 62a, the thickness of the members may be reduced to such a thickness that the pieces of ferrite 63 can be seen through of the beam portions 62a.

By forming the openings 62h in the protruded portions 63a as in Embodiment, the confirmation position can be brought close to the worker so that the pieces of ferrite 63 can be easily confirmed. However, by just forming the openings 62h without forming the protruded portions 63a, the presence or absence of the pieces of ferrite 63 can be confirmed.

The pieces of ferrite 63 provided in the coil base 61 as described above serve as magnetic paths for parts of magnetic flux generated from the heating coils 64, 65, and 66 that leak downward or laterally.

Thus, magnetic flux can be prevented from leaking from the coil unit 6, and adversely affecting electronic components on a circuit board provided in the operating portion 4, electronic components on a circuit board for supplying high-frequency current to the heating coils 64, 65, and 66, and the like.

Next, with reference to Fig. 3, the heating coil 64 of the coil unit 6 is formed in a circular ring shape by winding a conductive wire, and is placed around the central support 62 so as to surround the outer periphery of the central support 62. The heating coil 65 is formed like a circular ring larger than the outside diameter of the heating coil 64 by winding a conductive wire, and is placed so as to surround the outer periphery of the heating coil 64.

Next, the heating coils 66 are each formed in an odd-shaped ring-like shape that is a substantially cocoon-like shape extending in the circumferential direction of the disk-like coil base 61, and are arranged around the heating coil 65 at regular intervals in the circumferential direction. The number of the heating coils 66 is, for example, four.

The above-described odd-shaped ring-like heating coils 66 are manufactured, for example, as follows.

First, a coil from which the heating coil 66 is formed is formed by winding a wire that is a conductive wire into a predetermined ring shape.

For example, in the case of Embodiment, a coil is formed in a substantially elliptical shape. Then, the coil from which the heating coil 66 is formed is formed into a predetermined odd shape by pressing or the like, and the above-described odd-shaped ring-like heating coil 66 is formed.

After the pressing, stress (residual stress) that tries to return to the shape before the pressing remains in the coil formed like an odd-shaped ring.

Next, by heating the coil after the pressing, the stress that tries to return to the shape before the pressing is removed, and an odd-shaped ring-like heating coil 66 is formed.

By performing this heating treatment, recrystallization of the material of the heating coil 66 is promoted, residual stress is relaxed, and deformation in the temperature zone in actual use can be prevented. In the material of the heating coil 66 after heating treatment, there is grain growth due to recrystallization.

In the process of manufacturing the heating coil 66, heating treatment is performed as described above in order to remove the residual stress of the coil. If the coil is overheated, the dielectric strength decreases, and the life of the heating coil 66 may be decreased. Therefore, heating treatment is not performed to the extent that the residual stress is completely removed.

That is, in the heating coil 66, slight residual stress remains. So, by attaching a shape keeping means to the heating coil 66 as described below, the remaining slight residual stress is dealt with.

Next, shape keeping means that keeps the shape of the heating coil 66 that is an odd shape will be described.

With reference to Fig. 9, in the above-described heating coil 66 formed by pressing and heating treatment as described above, by bundling and holding a side or sides of the heating coil 66 with a tape or tapes 71 serving as shape keeping means, expansion that tries to return to the original shape due to the residual stress remaining in the heating coil 66 is prevented, and a vertical surface 66a (see Fig. 7) formed on the outer peripheral wall surface of the heating coil 66 is held.

In the case of the heating coil 66 of Embodiment, the planar shape of the heating coil 66 is like a cocoon, and therefore the curvature radius r of the curved portions 66b located on both sides in the figure and connecting long sides facing each other is small compared to the curvature radius R1 of the long side facing the outer side of the coil unit 6 and the curvature radius R2 of the long side facing the inner side of the coil unit 6 when the heating coil 66 is provided on the coil base 61.

That is, the term "odd-shaped heating coil 66" may include a heating coil having a plurality of curved portions that are different in size, and such a heating coil that the curvature of ring-like bundle of conductive wire forming the heating coil varies in different parts.

The term "odd-shaped heating coil" may also include a combination of a plurality of identical curved portions and uncurved portions connecting these curved portions like an ellipse.

Since the heating coil 66 is formed in an odd shape as described above, the heating coil 66 is prone to lose its shape in such a manner that the curvature radius r increases (expands), that is, in such a manner that the long sides facing each other move away from each other.

Methods for keeping the outer shape of the heating coil 66 that is prone to lose its shape by wrapping a tape or tapes 71 so as to bundle the conductive wire forming a ring shape as described above include the following.

As an example of this keeping method, the method shown in Fig. 9 (a) is a method in which a tape 71 is wrapped around the middle part of the heating coil 66 in a direction perpendicular to the longitudinal direction (left-right direction in the figure) in such a manner that the sides of the heating coil 66 facing each other are bundled.

When the tape 71 is wrapped around the heating coil 66 in this manner, expansion due to residual stress or the like of the heating coil 66 can be prevented in one wrapping position.

As another example, the method shown in Fig. 9 (b) is a method in which tapes 71 are wrapped around both ends of the heating coil 66 in a direction perpendicular to the longitudinal direction in such a manner that the long sides of the heating coil 66 facing each other are bundled.

In this case, the positions around which the tapes are wound are preferably close to the curved portions 66b having a small curvature radius r. That is, the tapes are preferably wound short of the steeply curved portions of the heating coil 66.

When the tapes 71 are wrapped in such a manner, the heating coil 66 can be held in the vicinities of the curved portions 66b of the coil where the force trying to return to the original shape due to residual stress is strong, and therefore the shape of the heating coil 66 can be kept more strongly.

When tapes 71 are wound in the vicinities of the curved portions 66b to hold the heating coil 66, the tapes 71 may be wound around only one of the long sides as shown in Fig. 5 and Fig. 6. Also in this case, the same effect can be obtained.

As yet another example, the method shown in Fig. 9 (c) is a method in which a tape 71 is wrapped around a bundle of conductive wire forming the inner long side (the lower long side in the figure) of the heating coil 66.

When the tape 71 is wrapped in such a manner, the disorder of the bundle of the coil caused by force trying to return the heating coil 66 to the original shape can be prevented, and the expansion of the curved portions and the whole heating coil can be prevented.

In the heating coil 66 configured as above, a lead wire 66c extends from the vicinity of the wound tape 71, and a terminal 69a attached to the end of the conductive wire is fixed to a terminal block 69 connected to an electricity supply portion that supplies electricity to the heating coil.

The terminal block 69 is placed on the back of the coil base 61. From the position from which the lead wire 66c extends, the lead wire 66c passes between the beam portions 62a and is led to the back of the coil base 61.

By winding a tape 71 around the vicinity of the position from which the lead wire extends as described above, the wound conductive wire can be prevented from becoming loose. In particular, loosening of the conductive wire accompanying the deformation of the heating coil 66 can be prevented.

The tape 71 used in Embodiment is, for example, a glass cloth tape which is resistant to heat and deformation.

Although in Embodiment, a heating coil having a cocoon shape that is an odd shape has been described, the present invention is effective for a heating coil that has internal stress deforming the outer shape of the coil in the heating coil or in which such internal stress is generated with use.

The present invention is also effective for, for example, a partly-curved heating coil, a coil having such a shape that curved portions are connected by straight lines (triangular shape, square shape), and a coil having a shape like an athletics track or an oval shape.

Next, a state where the heating coils 66 are attached to the coil base 61 will be described.

With reference to Fig. 7, the deformed ring shaped heating coils 66 described in Embodiment 1 are manufactured, during pressing or the like for forming into a predetermined shape, in such a manner that their outer peripheral wall surfaces are planar. In particular, in Embodiment, the outer peripheral wall surfaces of the coils are pressed so as to be surfaces perpendicular to the surface of the coil base 61 on which the heating coils are mounted (hereinafter referred to as "perpendicular surfaces 66a").

The term "perpendicular surface 66a" here does not mean a complete surface. The surface connecting the outer surfaces of the wire forming the outer peripheral wall surface of the heating coil 66 only needs to be substantially planar.

The odd-shaped ring-shaped heating coils 66 formed in this manner are attached to the coil base 61 as follows.

With reference to Fig. 5 to Fig. 7, the heating coils 66 are provided in rib-like positioning protruded portions 67 formed so as to protrude from the side plate 62b of the coil base 61 toward the central support 62, and attachment areas surrounded by the positioning protruded portions 67 and the circular portion 62c.

The heating coils 66 are attached to the coil attachment areas of the coil base 61 from a perpendicular direction. That is, the direction in which the heating coils 66 are attached is parallel to the perpendicular surfaces 66a.

Specifically, focusing on one of the heating coil attachment areas, the heating coil 66 is attached to each portion of the coil base 61 as follows.

First, the heating coil 66 is fitted in an area formed by the positioning protruded portions 67 formed in the coil base 61 and the circular portion 62c facing the positioning protruded portions 67. At this time, the tapes 71 wound around the heating coil 66 are placed on top of the beam portions 62a (see, for example, Fig. 5 to Fig. 6).

That is, the tapes 71 serving as shape keeping means are interposed between a part of the heating coil 66 that forms the position where the coil base 61 is placed and the conductive wire that forms the heating coil 66.

The outer peripheral surface 66e of the second long side 66d which is a side facing the heating coil 65 is in contact with the circular portion 62c, and the heating coil 66 is thereby positioned relative to the coil base 61.

In addition, when the heating coil 66 is attached to the coil base 61, a slight clearance is formed between the positioning protruded portions 67 and the heating coil 66.

As described above, the surfaces of the positioning protruded portions 67 and the circular portion 62c to which the heating coils 66 are attached are perpendicular to the surface of the coil base 61 to which the heating coils are attached.

Therefore, when the heating coil 66 is fitted in the attachment area, the planar perpendicular surface 66a of the heating coil 66 is brought into contact with the planar perpendicular surfaces of the positioning protruded portions 67 and the circular portion 62c, and the heating coils 66 can thereby be fitted in the coil base 61 correctly and easily.

Recess-shaped cutout portions 62d are formed in the circular portion 62c. Therefore, when the heating coil 66 is attached to the attachment area, a finger of the worker or a claw of an automatic coil attaching machine holding the heating coil 66 can enter.

Thus, the workability of the process of attaching the heating coils 66 can be improved.

Even if the heating coils 66 are attached to the coil base 61 with the residual stress remaining therein. However, as described above, the heating coils 66 are provided in the attachment areas in such a manner that the perpendicular surfaces 66a are in contact with the positioning protruded portions 67 and the circular portion 62c whose parts in contact with the heating coils 66 are planar. Therefore, even after the heating coils 66 are attached to the coil base 61, significant deformation of the heating coils 66 can be prevented.

The heating coils 66 are provided in the attachment areas of the coil base 61 formed by the positioning protruded portions 67 and the circular portion 62c. If the heating coils 66 are slightly deformed due to the residual stress generated in the heating coils 66, the perpendicular surfaces 66a of the outer peripheral wall surfaces and the surfaces of the positioning protruded portions 67 and the circular portion 62c come into parallel contact with each other, and therefore deformation can be suppressed.

The tapes 71 wound around the heating coils 66 are placed on top of the beam portions 62a on which the heating coils 66 are placed. Therefore, the conductive wires forming the heating coils 66 are less likely to be directly in contact with the beam portions 62a, and damage or the like to the conductive wires can be prevented.

When the heating coils 66 are attached to the coil base 61, a slight clearance is formed between the positioning protruded portions 67 and the heating coils 66. Therefore, even if there is a manufacturing variation in size between the heating coils 66, the heating coils 66 can be reliably attached.

Even if the heating coils 66 are deformed, the outer peripheral surfaces of the heating coils 66 are held by the positioning protruded portions 67, and therefore the expansion of the coils toward the outside of the attachment areas can be prevented.

In particular, in the case of Embodiment, the outer peripheral surfaces of the heating coils 66 are perpendicular to the mounting surfaces of the beam portions 62a, and the positioning protruded portions 67 in contact with the outer peripheral surfaces are also perpendicular to the mounting surfaces of the beam portions 62a. Therefore, the positioning protruded portions 67 are parallel contact with each other, and the heating coils 66 can be held more reliably.

### Reference Signs List

1 heating cooker main body, 2 top plate, 3 cover, 4 operating portion, 5 grille door, 6 coil unit, 61 coil base, 62 central support, 62a beam portion, 62b side plate, 63 piece of ferrite, 64, 65, 66 heating coil, 66a perpendicular surface, 67 positioning protruded portion, 7 coil unit, 8 heater unit, 71 tape

## Claims

1. An induction heating coil formed by winding a conductive wire into a ring shape,
wherein the induction heating coil has an outer shape formed in an odd shape, and includes shape keeping means attached thereto for keeping the outer shape.

2. The induction heating coil of claim 1, wherein the induction heating coil has a plurality of curved portions, and the shape keeping means is attached in the vicinity of the curved portion.

3. The induction heating coil of claim 1 or 2, wherein a position from which a lead wire of the induction heating coil extends is in the vicinity of a position where the shape keeping means is attached.

4. The induction heating coil of any one of claims 1 to 3, wherein the shape keeping means is a tape, and the tape is wrapped so as to bundle the conductive wire forming the ring shape.

5. The induction heating coil of claim 4, wherein the tape has heat resistance.

6. An induction heating cooker comprising:
a main body forming an outer shell;
a top plate that is provided on an upper surface of the main body and on which a cooking container is placed; and
a coil unit provided under the top plate,
wherein the coil unit has a coil base and a plurality of induction heating coils provided on the coil base, and
at least one of the plurality of induction heating coils is formed by winding a conductive wire into a ring shape whose outer shape is formed in an odd shape, and includes shape keeping means attached thereto for keeping the outer shape.

7. The induction heating cooker of claim 6, wherein the induction heating coil has a plurality of curved portions, and the shape keeping means is attached in the vicinity of the curved portion.

8. The induction heating cooker of claim 6 or 7, wherein a position from which a lead wire of the induction heating coil extends is in the vicinity of a position where the shape keeping means is attached.

9. The induction heating cooker of any one of claims 6 to 8, wherein the shape keeping means is a tape, and the tape is wrapped so as to bundle the conductive wire forming the ring shape.

10. The induction heating cooker of claim 9, wherein the tape has heat resistance.

11. The induction heating cooker of claim 9 or 10,
wherein the coil base has a central support and beam portions extending radially from the central support, and
the induction heating coil is provided on the beam portions in such a manner that the shape keeping means is located on top of the beam portions.

12. An induction heating cooker comprising:
a main body forming an outer shell;
a top plate that is provided on an upper surface of the main body and on which a cooking container is placed; and
a coil unit provided under the top plate,
wherein the coil unit has a coil base and a plurality of induction heating coils provided on the coil base,
the coil base has a central support and beam portions extending radially from the central support, and
the beam portions have recessed portions that are open upward, and the induction heating coils are provided on the beam portions.

13. An induction heating cooker comprising:
a main body forming an outer shell;
a top plate that is provided on the upper surface of the main body and on which a cooking container is placed; and
a coil unit provided under the top plate,
wherein the coil unit has a coil base, a plurality of induction heating coils provided on the coil base, and pieces of ferrite serving as magnetic paths for magnetic flux generated from the induction heating coils,
the coil base has a central support and beam portions extending radially from the central support, and
the beam portions have recessed portions that are open downward and to which the pieces of ferrite are attached, and the recessed portions have openings communicating with upper surfaces of the beam portions.

14. An induction heating cooker comprising:
a main body forming an outer shell;
a top plate that is provided on an upper surface of the main body and on which a cooking container is placed; and
a coil unit provided under the top plate,
wherein the coil unit has a coil base and a plurality of induction heating coils provided on the coil base,
the coil base has a central support, beam portions extending radially from the central support, and a circular portion that circularly connects the beam portions adjacent to each other around the central support, and
the circular portion divides an area where the heating coils are placed into an area on an inner side of the coil base and an area on an outer side of the coil base.

15. The induction heating cooker of claim 14, wherein a cutout portion is formed in a part that is located between the heating coil placed on the inner side of the circular portion and the heating coil placed on the outer side of the circular portion when the plurality of induction heating coils are placed on the coil base.

16. The induction heating cooker of claim 14, wherein the circular portion serves for the positioning of the induction heating coil placed on the outer side of the circular portion.
